# EUROPEAN PATENT SPECIFICATION

(11) **EP 4 312 572 B1**
(45) Date of publication and mention of the grant of the patent: **21.05.2025**
(21) Application number: 22718874.5
(22) Date of filing: 25.03.2022
(51) Int. Cl.: A23C 13/12, A23C 15/06, A23C 15/12, A23C 9/142

(54) **NOVEL MILK FAT GLOBULE CONCENTRATE, METHOD OF PRODUCTION THEREOF, AND FOOD PRODUCTS CONTAINING IT**
NEUARTIGES MILCHFETTKÜGELCHENKONZENTRAT, VERFAHREN ZU SEINER HERSTELLUNG UND LEBENSMITTELPRODUKTE DAMIT
NOUVEAU CONCENTRÉ EN GLOBULES DE MATIÈRE GRASSE DU LAIT, SON PROCÉDÉ DE PRODUCTION ET PRODUITS ALIMENTAIRES LE CONTENANT

(30) Priority: 26.03.2021 EP 21165328
(43) Date of publication of application: 07.02.2024
(73) Proprietor: Arla Foods amba, 8260 Viby J (DK)
(72) Inventor: SUWAL, Shyam, Krishna, 8260 Viby J (DK); ANDERSEN, Ulf, 8260 Viby J (DK)
(74) Representative: Guardian IP Consulting I/S
(86) International application number: PCT/EP2022/058017
(87) International publication number: WO 2022/200617

(56) References cited:
- EP-A2- 0 613 620
- WO-A1-2012/110706
- WO-A1-2017/103334
- WO-A1-89/10700
- US-A- 4 140 806
- US-A1- 2014 234 487
- US-A1- 2019 191 731
- ZHANG W ET AL: "Membrane Characterization by the Contact Angle Technique: II. Characterization of UF-Membranes and Comparison between the Captive Bubble and Sessile Drop as Methods to obtain Water Contact Angles", DESALINATION, 1 January 1989 (1989-01-01), Amsterdam, pages 263 - 273, XP055839913, [retrieved on 20210910], DOI: 10.1016/0011-9164(89)80011-6
- JUKKOLA ANNAMARI ET AL: "Effect of heat treatment and pH on the efficiency of micro-diafiltration for the separation of native fat globules from cream in butter production", JOURNAL OF MEMBRANE SCIENCE, vol. 548, 4 November 2017 (2017-11-04), NL, pages 99 - 107, XP055944126, ISSN: 0376-7388, Retrieved from the Internet <URL:https://www.sciencedirect.com/science/article/pii/S0376738817318914> [retrieved on 20220519], DOI: 10.1016/j.memsci.2017.11.012
- GOUDÉDRANCHE HENRI ET AL: "Fractionation of globular milk fat by membrane microfiltration", LE LAIT, 2000, pages 93 - 98, XP055839385, Retrieved from the Internet <URL:https://hal.archives-ouvertes.fr/hal-00895390/document> [retrieved on 20210909], DOI: 10.1051/lait:2000110
- BRANS G ET AL: "Membrane fractionation of milk: state of the art and challenges", JOURNAL OF MEMBRANE SCIENCE, ELSEVIER BV, NL, vol. 243, no. 1-2, 2004, pages 263 - 272, XP004572543, ISSN: 0376-7388, DOI: 10.1016/J.MEMSCI.2004.06.029

## Description

### FIELD OF THE INVENTION

The present invention pertains to a new method of producing high fat concentrates of milk fat globules by microfiltration, and to a milk fat globule concentrate obtainable by this method. The invention furthermore pertains to a new process of preparing a butter-like milk fat-containing product.

### BACKGROUND

Butter is traditionally prepared by churning of cream (35-40% w/w fat) which has been skimmed from raw milk by centrifugation. The mechanical shear applied during the churning process disrupts the membranes of the milk fat globules of the cream and causes the milk fat to aggregate in larger fat grains which can be separated from the liquid phase (the buttermilk).

WO 89/10700 discloses the production of a fat product based on milk fat where the cream is concentrated by centrifugation to a fat content of 60-85% at a temperature of 50-70 degrees C. The concentrated cream is cooled to a temperature of 15-30 degrees C, and is stored until the milk fat starts to crystallize. The cooled concentrated cream is mixed with vegetable oils in an amount calculated to at least 25% of the amount of fat in the end product. After storage the mixture is stirred gently under cooling in order to achieve a phase reversal.

US 2003/0175399 A1 discloses dairy products having a total fats content lower than or equal to 400 g/kg and a fat globule distribution such that globules of lower diameter than 2.0 micron represent 10% to 60% in weight of the total fats, and the fat globules of higher diameter than to 6 micron represent 10% to 30% in weight of the total fats. The dairy products were produced by microfiltration of milk or mixtures of milk and cream.

US 2019/0191731 A1 discloses a method of modification of dry matter composition and/or dry matter content of milk, comprising the steps of:
- providing raw milk having a fat content in the range of about 3 % w/w to about 60 % w/w;
- modifying, e.g. by microfiltration, a dry matter composition and/or dry matter content of the raw milk to provide a modified raw milk having:
   - a fat content in the range of about 35 % w/w to about 60 % w/w based on the total weight of the modified raw milk, and
   - a protein content of at most 3 % w/w and/or carbohydrate content of
   at most 4 % w/w based on a fat-free portion of the modified raw milk.

WO 2012/110706 discloses a method for producing cheese, comprising the steps of:
- providing a milk raw material,
- subjecting the milk raw material to microfiltration and pre-acidification to produce an acidified casein concentrate, where the microfiltration is performed prior to or simultaneously with the pre-acidification,
- concentrating the acidified casein concentrate to produce full concentrated pre-cheese,
- processing the full concentrated pre-cheese to a cheese product.

Goudedranche et al (Le Lait, INRA Editions, 2000, 80 (1), pp.93-98.) discloses separation of milk fat in small globules (SG) (diameter lower than 2 µm) and in large globules (LG) (diameter higher than 2 µm) using special ceramic microfiltration membranes. Transformations in drinking milks, yoghourts, sour cream, camembert, Swiss cheese and butters were realized from milks of which the fat content was adjusted either by reference cream or by creams issued from the SG or the LG fractions. Significant differences in texture and organoleptic properties were found in the manufactured products. Except for butter, use of milks containing small fat globules led to more onctuous products and finer textural characteristics versus products made with reference creams or with mainly large fat globules. Fat globule membrane appeared to have a high ability to bind water in cheese and so, to allow a significant increase in cheese yield.

Jukkola et al (Journal of Membrane Science, 2017, 548, pp. 99-107) discloses a process for separating milk fat globules and proteins in cream prior to butter making to enhance deployment of milk fat globule membrane in buttermilk: Cream was micro-diafiltered with water using a tubular ceramic membrane with a pore size of 1.4 µm, reducing the protein content in cream overall by ~80%.

WO 2017/103334 A1 discloses a method of modification of dry matter composition and/or dry matter content of milk, comprising the steps of: providing raw milk having a fat content in the range of about 3% w/w to about 60% w/w; modifying a dry matter composition and/or dry matter content of the raw milk to provide a modified raw milk having a fat content in the range of about 35% w/w to about 60% w/w based on the total weight of the modified raw milk, and a protein content of at most 3% w/w and/or a carbohydrate content of at most 4% w/w based on a fat-free portion of the modified raw milk. WO 2017/103334 A1 further discloses a method of production of butter, wherein the milk with the modified dry matter composition and/or dry matter content is churned to provide butter.

### SUMMARY OF THE INVENTION

The present inventors have discovered that new high fat concentrates of milk fat globules can be prepared by concentrating a milk fat globule-containing dairy liquid (mfl) by gentle microfiltration. The resulting milk fat globule concentrate has a taste and textural properties that are surprisingly close to that of butter despite the fact that neither mfl nor the milk fat globule concentrate have been subjected to churning. The invention therefore enables a more efficient approach for the production of butter-like products.

Thus, an aspect of the invention pertains to a method of producing a milk fat globule concentrate, the method comprising the following steps:
1) providing a milk fat globule-containing dairy liquid (mfl) which is a cream having a total fat content in the range of 10-50% w/w,
2) subjecting the mfl to microfiltration (MF) to concentrate the mfl to a total fat content of in the range of 60-85% w/w, wherein the microfiltration involves the use of a ceramic microfiltration membrane, wherein the microfiltration membrane has a pore size in the range of 0.05-1.5 micron.

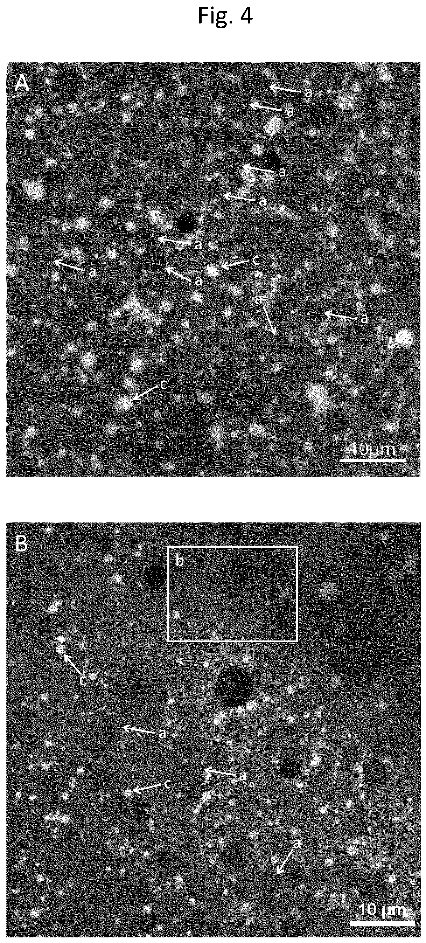

In addition to requiring less energy than the traditional butter-making processes, the inventors have observed that the method provides a milk fat globule concentrate that has a surprisingly high content of milk fat globule-derived phospholipids which indicates that the milk fat globule concentrate still contains a considerably amount of native milk fat globules. This has also been confirmed in Example 1 (see e.g. Figure 4).

Thus, another aspect of the invention pertains to a milk fat globule concentrate, obtainable according to the method described herein, which milk fat globule concentrate comprises:
- total fat in an amount in the range of 60-85% w/w,
- water in an amount in the range of 10-39% w/w
- total protein in an amount in the range of 0-5% w/w,
the milk fat globule concentrate having a pH in the range of 5.0-8.

A more narrow aspect of the invention pertains to a milk fat globule concentrate which is obtainable by a method of the invention and which comprises:
- total fat in an amount in the range of 60-85% w/w,
- water in an amount in the range of 15-39% w/w,
- total protein in an amount in the range of 0-5% w/w
the milk fat globule concentrate having a pH in the range of 5.0-8.

A further aspect of the invention pertains to a process of preparing a butter-like milk fat-containing product (bmp), the process comprising the steps of:
i) providing a milk fat globule concentrate according to the invention or preparing a milk fat globule concentrate by a method according to the invention,
ii) subjecting the milk fat globule concentrate and/or a subsequent product stream comprising the milk fat globule concentrate to at least one of:
   ii-a) addition of one or more of sodium chloride, colour, butter flavour, water, a fermented dairy product, and/or a combination thereof,
   ii-b) holding at temperature(s) of at most 20 degrees C for a duration sufficient for forming fat crystals in a least some of the milk fat globules,
   ii-c) mechanical shearing,
   ii-d) addition of a further fat source, preferably a vegetable oil, and
   ii-e) packaging,
and wherein the milk fat globule concentrate is provided in an amount sufficient to provide at least 40% w/w of the total fat of the bmp.

### SUMMARY OF THE FIGURES

Figure 1 shows photographs of concentrated creams produced according to the invention (left) or by centrifugation (right) spread onto a paper surface to visualize the brittleness and grainy visual appearance of the two products.
Figure 2 shows the particle size distribution of the feed cream, the concentrated cream obtained by microfiltration (according to the invention) and the concentrated cream obtained by centrifugation.
Figure 3 shows confocal micrographs of fresh concentrated creams from microfiltration (A) or centrifugation (B). Examples of intact, spherical fat globules are indicated with 'a', where as examples of fat domains caused by shear damage are indicated with 'b'.
Figure 4 shows confocal micrographs of cold-stored concentrated creams from microfiltration (A) or centrifugation (B). Intact fat globules are seen as dark gray spheres (indicated with 'a'). The structure of the centrifugated cream is dominated by large areas of continuous fat, seen as uniform gray areas (exemplified by the rectangle denoted 'b'). Water droplets are seen as bright (predominantly spherical) spots, indicated with 'c'.

### DETAILED DESCRIPTION

An aspect of the invention pertains to a method of producing a milk fat globule concentrate, the method comprising the following steps:
1) providing a milk fat globule-containing dairy liquid (mfl) which is a cream having a total fat content in the range of 10-50% w/w,
2) subjecting the mfl to microfiltration to concentrate the mfl to a total fat content of in the range of 60-85% w/w, wherein the microfiltration involves the use of a ceramic microfiltration membrane, wherein the microfiltration membrane has a pore size in the range of 0.05-1.5 micron.

The milk fat globule concentrate obtained by the method is the concentrated milk fat globule-containing product resulting from the method steps.

In the context of the present invention the term "milk fat globule-containing dairy liquid" or "mfl" pertains to a dairy liquid derived from ruminant milk, and which contains milk fat globules from the original milk source. The milk fat globules of the mfl preferably resemble the milk fat globules of the original milk source and have preferably been concentrated with no or only limited membrane damage during processing. It is particularly preferred that most, if not substantially all, of the fat of the mfl is present in the form of milk fat globules.

The original milk source is milk obtained from one or more ruminant species, and is preferably milk from one or more of cow, sheep, goat, buffalo, camel, llama, mare and/or deer. It is particularly preferred that the mfl is derived from cow milk.

The fat of the mfl is milk fat and the proteins of the mfl are proteins found in milk.

The mfl of step 1) consists of milk-derived cream.

The mfl is a cream having a total fat content in the range of 10-50% w/w, preferably prepared by concentrating milk fat globules from milk, preferably by centrifugation or alternatively by microfiltration.

In the context of the present invention the term "fat" pertains to the sum of triglycerides, diglycerides, and monoglycerides and is quantified according to Analysis B.

The mfl of step 1) preferably has a pH in the range of 5.0-8, more preferably 5.5-8.0, even more preferably 6.0-7.5, and most preferably 6.4-7.0.

While a wide range of temperatures can be used, the inventors have found it advantageous that the mfl of step 1) has a temperature in the range of 40-70 degrees C, more preferably 45-70 degrees C, even more preferably 50-65 degrees C, and most preferably 55-60 degrees C.

The mfl of step 1) preferably comprises total protein in an amount in the range of 0.5-5% w/w, more preferably 1-4% w/w, even more preferably 1.5-3.5% w/w, and most preferably 1.5-3.0% w/w.

Alternatively, but also preferred, the mfl of step 1) may comprise total protein in an amount in the range of 0.5-5% w/w, more preferably 0.5-4% w/w, even more preferably 0.5-3% w/w, and most preferably 0.5-1% w/w.

In preferred embodiments of the invention the mfl of step 1) comprises total fat in an amount in the range 10-48% w/w, even more preferably 30-46% w/w, and most preferably 35-44% w/w.

The mfl of step 1) typically comprises carbohydrate in an amount in the range of 0-10% w/w, more preferably 0.1-8% w/w, even more preferably 0.5-6% w/w, and most preferably 1-5% w/w.

The mfl of step 1) typically has a weight ratio between total fat and total protein in the range of 5-50, more preferably 10-40, even more preferably 15-30, and most preferably 17-25.

It is particularly preferred that the preparation of the mfl has not involved size reduction of milk fat globules, e.g. by homogenisation and the inventors have seen indications that non-homogenised mfls perform better in the present invention than homogenised mfls, and provide concentrates containing milk fat globules with less damaged globule membranes. It is therefore preferred that the mfl is a non-homogenised mfl. Milk fat globule concentrates based on non-homogenized mfl are also preferred for the preparation of the present bmp.

While not always necessary, it is often preferred that the mfl is heat-treated prior to step 2). Preferably, the mfl has been heat-treated at most 60 minutes prior to the microfiltration, more preferably at most 30 minutes prior to the microfiltration, even more preferred at most 10 minutes prior to the microfiltration and most preferably at most 5 minutes prior to the microfiltration.

The heat-treatment prior to the microfiltration preferably involves heating the mfl to a temperature of at least 70 degrees C for a duration sufficient to obtain at least partial microbial reduction. The duration depends on the temperature and the desired level of microbial reduction. Preferably, the duration is sufficient to reduce content of colony forming units by at least 99%, more preferably by at least 99.9%, even more preferably by at least 99.99% and most preferably by at least 99.999%.

Useful heat-treatments are e.g. 70-80 degrees C for 5-300 seconds.

Preferably, the heat-treatment prior to the microfiltration, if used, denatures at most 50% of the beta-lactoglobulin, more preferably at most 30% of the beta-lactoglobulin, even more preferably at most 25% of the beta-lactoglobulin, and most preferably at most 20% of the beta-lactoglobulin.

The heat-treatment prior to the microfiltration, if used, preferably denatures 1-50% of the beta-lactoglobulin, more preferably 2-30% of the beta-lactoglobulin, even more preferably 3-25% of the beta-lactoglobulin, and most preferably 4-20% of the beta-lactoglobulin.

After the heat-treatment the mfl is preferably cooled to the temperature desired for microfiltration.

Step 2) involves subjecting the mfl to microfiltration to concentrate the mfl to a total fat content in the range of 60-85% w/w, wherein the microfiltration involves the use of a ceramic microfiltration membrane. The microfiltration is operated with one or more membranes that keep the fat globules in the retentate stream(s) and allows smaller components such as free whey proteins, lactose and minerals to enter the permeate stream(s).

The microfiltration of step 2) increases the content of fat on a weight percent basis relative to the fat content of the mfl.

The MF membrane may also be permeable to at least some of the casein micelles, typically the smaller of casein micelles. Alternatively and sometimes preferred, the MF membrane may be permeable to a substantial amount of the casein micelles.

Step 2) may be implemented as a batch process step, a semi-batch process step or a continuous process step. Implementation as a continuous process step is particularly preferred.

In some preferred embodiments of the invention, the microfiltration of step 2) furthermore involves diafiltration, preferably using a diluent in the form of water or an aqueous solution. Useful diluents are e.g. water, reverse osmosis permeate of milk or whey, nanofiltration permeate of milk or whey, and/or ultrafiltration permeate of milk or whey. The diluent is preferably essentially free of protein.

The inventors have found that further protein reduction is possible. In some preferred embodiments of the invention, the diluent for diafiltration comprises a chelating agent capable of binding calcium. The chelating agent is preferably selected from the group consisting of citrate, EDTA, orthophosphate, and/or hydrogen phosphate. The chelating agent is preferably present in an amount sufficient to release at least some of the casein from the casein micelles.

Alternatively or additionally it is sometimes preferred that the mfl has been added a chelating agent capable of binding calcium. The chelating agent is preferably selected from the group consisting of citrate, EDTA, orthophosphate, and/or hydrogen phosphate. The chelating agent is preferably present in the mfl in an amount sufficient to release at least some of the casein from the casein micelles.

In other preferred embodiments of the invention, the microfiltration of step 2) does not involve diafiltration.

The mfl is concentrated to a total fat content of in the range of 60-85% w/w, more preferably 62-85% w/w, more preferably 65-85% w/w, even more preferably 70-85% w/w, and most preferably 72-82% w/w.

In some preferred embodiments of the invention the mfl is concentrated to a total fat content of in the range of 70-85% w/w, more preferably 73-85% w/w, even more preferably 76-85% w/w, and most preferably 80-85% w/w.

Concentration of the mfl to a total fat content of 81-85% w/w, more preferably 81-85% w/w, even more preferably 82-85% w/w, and most preferably 82-84% w/w is advantageous if the milk fat globule concentrate subsequently is to be processed into a butter-like product, and particularly into butter as such.

The microfiltration membrane is capable of retaining a substantial portion of the milk fat globules but permeable to native beta-lactoglobulin and preferably also other whey proteins. Often it is also preferred that the microfiltration membrane is permeable to at least the smallest casein micelles.

The inventors have found that it is advantageous to avoid membranes with too large pore sizes as these are blocked by milk fat globules during operation.

The microfiltration membrane has a pore size in the range of 0.05-1.5, even more preferably 0.1-0.8, and most preferably 0.2-0.4 micron. In other preferred embodiments of the invention the microfiltration membrane has a pore size in the range of 0.1-1.5, even more preferably 0.2-1.0, and most preferably 0.2-0.8 micron. The inventors have found that for some applications it is beneficial to increase the weight ratio between casein and whey protein and have seen indications that it provides a milk fat globule concentrate with improved stability.

Preferred embodiments of the invention the step 2) is arranged and operated to provide a milk fat globule concentrate having a weight ratio between casein and whey protein of 80:20-99:1, more preferably 80:20-98:2, even more preferably 85:15-98:2, and most preferably 90:10-98:2.

The microfiltration of step 2) involves the use of a ceramic MF membrane.

The inventors have observed that polymeric microfiltration membranes are unsuitable for concentrating milk or cream to very high fat contents such as e.g. 50% w/w or higher.

In some preferred embodiments of the invention the microfiltration of step 2) involves the use of a ceramic membrane comprising or even consisting of metal oxide and/or metal carbide.

In other preferred embodiments of the invention the microfiltration of step 2) involves the use of a ceramic membrane comprising or even consisting of aluminium oxides, titanium oxides, zirconium oxides, or a combination thereof.

In further preferred embodiments of the invention the microfiltration of step 2) involves the use of a ceramic membrane comprising or even consisting of aluminium carbide, silicon carbide, or a combination thereof.

The inventors have found it advantageous that the MF membrane is a ceramic membrane comprising or even consisting of silicon carbide. Preferably, the MF membrane(s) used in step 2) are ceramic membrane(s) comprising or even consisting of silicon carbide.

The inventors have furthermore found it advantageous to use hydrophilic MF membranes and have seen indications that the use of hydrophilic MF membrane for preparing milk fat globule concentrates containing at least 60% fat, or even at least 50% w/w fat, provides less damage to the milk fat globules.

In some preferred embodiments of the invention the MF membrane has a contact angle against a droplet of distilled water at 20 degrees C of at most 40 degrees, more preferably at most 30 degrees, even more preferably at most 20 degrees, and most preferably at most 15 degrees.

The microfiltration may for example employ monotube or multichannel configurations. Multichannel configuration is particularly preferred.

The microfiltration may be performed in a number of ways e.g. in batch, feed-batch or continuous mode and may involve only a single filter module or multitude of filter modules arranged in series and/or in parallel.

The inventors have found it advantageous to use the mfl at a temperature of at least 40 degrees C in step 2) in order to avoid or at least reduce shear damage of the milk fat globules. Without being bound by theory, it is believed that the low content of solid fat in the milk fat globules at 40 degrees C makes the fat globules more flexible and less likely to disrupt during the microfiltration.

The inventors have furthermore found it advantageous to limit or even avoid the exposure to protein denaturing temperatures during the microfiltration.

Preferably, the temperature of the mfl and MF retentate(s) derived from the mfl during the step 2) is in the range of 40-65 degrees C; more preferably 45-65 degrees C, even more preferably 50-65 degrees C, and most preferably 50-60 degrees C.

In the context of the present invention the term "MF retentate(s)" pertain to both the final retentate resulting from the microfiltration operation of step 2) and to intermediate milk fat globule-containing MF retentates which are present in some implementations of step 2), e.g. if diafiltration is used and/or if the microfiltration involves several MF units operates in series.

The inventors have seen indications that operating the microfiltration with a relatively low transmembrane pressure provides less shear and hence less damage on the milk fat globule membranes than microfiltration at very high transmembrane pressures.

In some preferred embodiments of the invention the microfiltration involves a transmembrane pressure in the range of 0.1-10 bar, more preferably 0.1-5 bar, more preferably 0.2-3 bar, even more preferably 0.3-1.0 bar, and most preferably 0.4-0.6 bar.

In other preferred embodiments of the invention the microfiltration involves a transmembrane pressure of at most 10 bar, more preferably at most 5 bar, more preferably at most 3 bar, even more preferably at most 1 bar, and most preferably at most 0.6 bar.

In further preferred embodiments of the invention the microfiltration involves a transmembrane pressure of at most 0.4 bar, more preferably at most 0.3 bar, even more preferably at most 0.2 bar, and most preferably at most 0.1 bar.

The microfiltration of step 2) is preferably arranged and operated to lose at most 2% w/w of the total fat of the mfl to the microfiltration permeate, more preferably at most 1.5% w/w, even more preferably at most 1.0% w/w, and most preferably at most 0.8% w/w.

In the context of the present invention the term "arranged and operated" means that the microfiltration is implemented and operated to fulfil the mentioned requirement. This means e.g. making an appropriate membrane selection and appropriate choices of operational parameters. Microfiltration as such is well-known to the skilled person and the skilled person is capable of making the appropriate selections and choices based on the guidance provided herein and his/her general technical knowledge.

In other preferred embodiments of the invention the microfiltration of step 2) is arranged and operated to lose at most 0.5% w/w of the total fat of the mfl to the microfiltration permeate, more preferably at most 0.3% w/w, even more preferably at most 0.1% w/w, and most preferably at most 0.05% w/w.

In further preferred embodiments of the invention the microfiltration of step 2) is arranged and operated to lose at most 45% w/w of the total phospholipid of the mfl to the microfiltration permeate, more preferably at most 30% w/w, even more preferably at most 20% w/w, and most preferably at most 16% w/w.

In some preferred embodiments of the invention the microfiltration of step 2) is arranged and operated to lose at most 10% w/w of the total phospholipid of the mfl to the microfiltration permeate, more preferably at most 6% w/w, even more preferably at most 4% w/w, and most preferably at most 2% w/w.

In the context of the present invention the term "microfiltration permeate" pertains to the permeate stream or combined permeate streams resulting from the microfiltration of step 2).

The inventors have observed that it often is beneficial to control the permeate flux during the microfiltration by applying a back-pressure at the permeate side of the MF membrane, e.g. using an appropriate valve. The back-pressure is preferably 0-5 bar and more preferably 0-3 bar. It is often preferred that the back-pressure at the permeate side of the MF membrane is lower than transmembrane pressure.

It may furthermore be preferred to subject the milk fat globule concentrate to a heat-treatment. The heat-treatment of the milk fat globule concentrate preferably involves heating the milk fat globule concentrate to a temperature of at least 70 degrees C for a duration sufficient to obtain at least partial microbial reduction. The duration depends on the temperature and the desired level of microbial reduction. Preferably, the duration is sufficient to reduce content of colony forming units by at least 99%, more preferably by at least 99.9%, even more preferably by at least 99.99% and most preferably by at least 99.999%.

Useful heat-treatments are e.g. 70-80 degrees C for 5-300 seconds.

Preferably, the heat-treatment of the milk fat globule concentrate, if used, denatures at most 50% of the beta-lactoglobulin, more preferably at most 30% of the beta-lactoglobulin, even more preferably at most 25% of the beta-lactoglobulin, and most preferably at most 20% of the beta-lactoglobulin.

The heat-treatment of the milk fat globule concentrate, if used, preferably denatures 1-50% of the beta-lactoglobulin, more preferably 2-30% of the beta-lactoglobulin, even more preferably 3-25% of the beta-lactoglobulin, and most preferably 4-20% of the beta-lactoglobulin.

After the heat-treatment the milk fat globule concentrate is preferably cooled or alternative subjected to further processing.

It is preferred that step 2) does not involve concentration of milk fat globules by centrifugation.

The method of the invention may be implemented as a batch process, a semi-batch process or a continuous process. Implementation as a continuous process is particularly preferred.

Another aspect of the invention pertains to a milk fat globule concentrate obtainable according to the method described herein, the milk fat globule concentrate comprising:
- total fat in an amount in the range of 60-85% w/w,
- water in an amount in the range of 10-39% w/w
- total protein in an amount in the range of 0-5% w/w,
the milk fat globule concentrate having a pH in the range of 5.0-8.

In some preferred embodiments of the invention the milk fat globule concentrate comprises:
- total fat in an amount in the range of 60-85% w/w,
- water in an amount in the range of 15-39% w/w,
- total protein in an amount in the range of 0-5% w/w,
the milk fat globule concentrate having a pH in the range of 5.0-8.

The milk fat globule concentrate preferably comprises total fat in an amount in the range of 62-85% w/w, more preferably 65-85% w/w, more preferably 70-85% w/w, even more preferably 70-82% w/w, and most preferably 75-82% w/w.

The milk fat globule concentrate preferably comprises total protein in an amount in the range of 0.1-5% w/w, more preferably 0.2-3% w/w, even more preferably 0.3-1.5% w/w, and most preferably 0.4-1.0% w/w.

Alternatively but also preferred the milk fat globule concentrate may comprise total protein in an amount in the range of 0.4-5% w/w, more preferably 0.5-3% w/w, even more preferably 0.6-1.5% w/w, and most preferably 0.7-1.2% w/w.

The inventors have found it advantageous to limit the content of protein present in the milk fat globule concentrate and particularly to limit the content of protein that is not bound to the milk fat globules.

In some preferred embodiments of the invention the milk fat globule concentrate comprises protein which is not bound to fat globules in an amount in the range of 0-2% w/w, more preferably 0-1% w/w, even more preferably 0-0.5% w/w, and most preferably 0-0.3% w/w.

In some preferred embodiments of the invention the milk fat globule concentrate has a weight ratio between casein and whey protein of 70:30-99:1, more preferably 80:20-98:2, even more preferably 85:15-98:2, and most preferably 90:10-98:2.

In some preferred embodiments of the invention the milk fat globule concentrate comprises carbohydrate in an amount in the range of 0-4% w/w, more preferably 0-2% w/w, even more preferably 0-1% w/w, and most preferably 0-0.5% w/w.

In some preferred embodiments of the invention the milk fat globule concentrate comprises lactose in an amount in the range of 0-4% w/w, more preferably 0-2% w/w, even more preferably 0-1% w/w, and most preferably 0-0.5% w/w.

In some preferred embodiments of the invention the milk fat globule concentrate has an ash content in the range of 0-4% w/w, more preferably 0.05-2% w/w, even more preferably 0.1-1.0% w/w, and most preferably in the range of 0.2-0.4%.

In some preferred embodiments of the invention the milk fat globule concentrate has a pH in the range of 5-8, more preferably 5.5-8.0, even more preferably 6.0-7.5, and most preferably 6.4-7.0.

In other preferred embodiments of the invention the milk fat globule concentrate has a pH in the range of 6.0-7.5, more preferably 6.0-7.0, even more preferably 6.4-7.0% w/w, and most preferably in the range of 6.4-6.8.

In some preferred embodiments of the invention the milk fat globule concentrate has a weight ratio between total phospholipid and total fat of at least 0.0022, more preferably at least 0.0024, even more preferably at least 0.0028, and most preferably at least 0.0030.

In other preferred embodiments of the invention the milk fat globule concentrate has a weight ratio between total phospholipid and total fat in the range of 0.0022-0.02, more preferably 0.0024-0.01, even more preferably 0.0028-0.007, and most preferably 0.0030-0.005.

In further preferred embodiments of the invention the milk fat globule concentrate has a weight ratio between total phospholipid and total fat of at least 0.0033, more preferably at least 0.0035, even more preferably at least 0.0037, and most preferably at least 0.0038.

In even further preferred embodiments of the invention the milk fat globule concentrate has a weight ratio between total phospholipid and total fat of 0.0033-0.02, more preferably 0.0035-0.01, even more preferably 0.0037-0.007, and most preferably 0.0038-0.005.

In some preferred embodiments of the invention the milk fat globule concentrate comprises at least 55% w/w of the total phospholipid of the mfl, more preferably at least 70% w/w, even more preferably at least 80% w/w, and most preferably at least 84% w/w.

In other preferred embodiments of the invention the milk fat globule concentrate comprises at least 90% w/w of the total phospholipid of the mfl, more preferably at least 94% w/w, even more preferably at least 96% w/w, and most preferably at least 98% w/w.

In some preferred embodiments of the invention the milk fat globule concentrate contains at most 10000 colony forming units per g, more preferably at most 2000 colony forming units per g, even more preferably at most 1000 colony forming units per g, and most preferably at most 500 colony forming units per g.

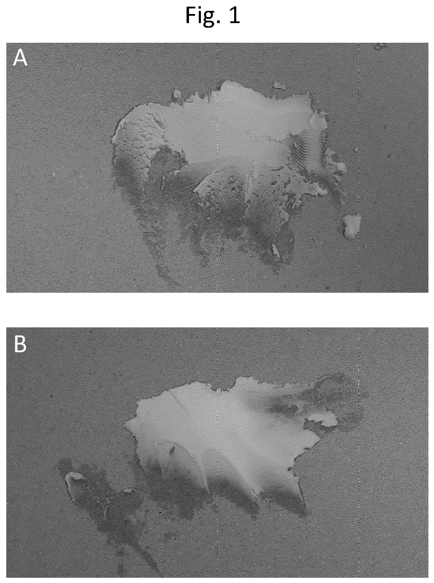

The milk fat globule concentrate of the present invention has a quality that allows it to be used directly as a butter-like milk fat-containing spread (see e.g. Figure 1) and has a higher content of intact milk fat globules and native phospholipids than comparable products. This improves the overall spreadability of the milk fat globule concentrate and counteracts undesired brittleness in the product. Furthermore, milk fat globule concentrate can be used directly as a spread without churning and can be packaged directly as it is or alternatively blended with salt and flavourants prior to packaging. Additionally, the milk fat globule concentrate of the invention has an improved nutritional value relative to traditional butter due to the improved content of phospholipids and the increased content milk fat globule membrane material that the present milk fat globule concentrate typically contains.

Process-wise, the present method offers a simple yet robust alternative to traditional butter production as the present method does not require cream-aging prior to a churning step and avoids the energy-intensive churning step that the traditional butter process requires to provoke phase inversion of the milk fat globules. The present method therefore requires less energy than traditional butter churning and can be implemented without time-consuming aging steps of the conventional method.

Furthermore, the MF permeate that is the by-product of the present method is more useful than traditional buttermilk and is more easily incorporated into other dairy products. It furthermore has a lower fat content than traditional buttermilk. Therefore, the present method minimizes the loss of fat into the buttermilk and increases the yield of butter like products.

Yet an aspect of the invention pertains to a process of preparing a butter-like milk fat-containing product (bmp), the process comprising the steps of:
i) providing a milk fat globule concentrate of the invention or preparing a milk fat globule concentrate by a method of the invention,
ii) subjecting the milk fat globule concentrate and/or a subsequent product stream comprising the milk fat globule concentrate to at least one of the sub-steps:
   ii-a) addition of one or more of sodium chloride, colour, butter flavour, water, a fermented dairy product, and/or a combination thereof,
   ii-b) holding at temperature(s) of at most 20 degrees C for a duration sufficient for forming fat crystals in a least some of the milk fat globules,
   ii-c) mechanical shearing,
   ii-d) addition of a further fat source, preferably a vegetable oil, and
   ii-e) packaging,
and wherein the milk fat globule concentrate is provided in an amount sufficient to provide at least 40% w/w of the total fat of the bmp.

An advantage of this process is that that it reduces, or even avoids, the production of buttermilk side streams as most, or even all, of the water of the milk fat globule concentrate stays in the butter-like milk fat-containing product.

The sub-steps are process steps that can be performed during the process, e.g. a single time or even several times if desired.

The sub-step(s) modify the milk fat globule concentrate and/or the subsequent product stream(s) that comprises the milk fat globule concentrate. The term "subsequent product stream" pertains to further milk fat compositions comprising the milk fat globule concentrate, which compositions are obtained during the process. The bmp is the product stream obtained by the final stage of the process.

The sub-steps of step ii) can be performed in any order, with the exception that if step ii-e) is used, any sub-steps ii-a), ii-c), and ii-d) are preferably performed prior to step ii-e). The inventors have found that addition of further ingredients according to sub-steps ii-a) and ii-d), and mechanical shearing according to sub-step ii-c) are challenging to perform after the bmp has been packaged and therefore it is preferred to any of these steps prior to a packaging step. Processing by low temperature-holding according of sub-step ii-b) can be performed both prior to and/or after a packaging step.

The sub-step(s) modify the milk fat globule concentrate and/or the subsequent product stream(s) that comprises the milk fat globule concentrate. The term "subsequent product stream" pertains to further milk fat compositions comprising the milk fat globule concentrate, which compositions are obtained during the process. The bmp is the product stream obtained by the final stage of the process.

Sub-step ii-a) involves addition of one or more of sodium chloride, colour, butter flavour, water, a fermented dairy product, and/or a combination thereof.

In some preferred embodiments of the invention step ii-a) furthermore involves blending the added ingredients with the milk fat globule concentrate and/or a subsequent product stream comprising the milk fat globule concentrate.

In some embodiments, it is preferred that the blending causes at least some phase inversion.

In other embodiments, it is preferred that the blending causes nor or only limited phase inversion.

The blending of step ii-a) preferably takes place at a temperature of 5-20 degrees C, more preferably 10-17 degrees C, and most preferably 12-15 degrees C.

Sub-step ii-b) is a cold holding step and involves holding the composition in question at temperature(s) of at most 20 degrees C for a duration sufficient for forming fat crystals in a least some of the milk fat globules.

In some preferred embodiments of the invention step ii-b) involves holding at a temperature of at most 18 degrees C, more preferably at most 17 degrees C, and most preferably at most 15 degrees C.

In some preferred embodiments of the invention step ii-b) involves holding at a temperature of 5-20 degrees C, more preferably 10-17 degrees C, and most preferably 12-15 degrees C.

Sub-step ii-b) may furthermore comprise one or more aging steps similar to those used for cream-aging prior to butter churning.

It is often preferred that any processing that proceeds sub-step ii-b) is performed at a temperature 5-20 degrees C, more preferably 5-17 degrees C, and most preferably 5-15 degrees C.

Sub-step ii-c) involves mechanical shearing, preferably to obtain at least some phase inversion, meaning that at least some of milk fat globules merge to form larger milk fat regions.

The mechanical shearing may be performed by dedicated butter-making equipment, a mixer, a scraped surface heat exchanger, or a combination thereof. Preferably, the mechanical shearing is performed by a mixer and/or a scraped surface heat exchanger. In some preferred embodiments the mechanical shearing of step ii-c) involves churning, e.g. using a device for butter churning.

The temperature of the composition subjected to sub-step ii-c is typically at most 20 degrees C and preferably less than 20 degrees C. In some preferred embodiments of the invention the temperature of the composition subjected to sup-step ii-c is 5-20 degrees C, more preferably 10-17 degrees C, and most preferably 12-15 degrees C.

In some preferred embodiments of the invention step ii) involves:
ii-b) holding at temperature of at most 20 degrees C for a duration sufficient for forming fat crystals in a least some of the milk fat globules, followed by
ii-c) mechanical shearing,
and wherein step ii-a) is performed after step ii-b), and preferably prior to and/or during the mechanical shearing.

Sub-step ii-d) involves addition of a further fat source, preferably a vegetable oil.

In some preferred embodiments of the invention the vegetable oil comprises or even consists of selected from the group of consisting of sunflower oil, corn oil, sesame oil, soya bean oil, palm oil, linseed oil, grape seed oil, rapeseed oil, olive oil, groundnut oil, and combinations thereof. Rapeseed oil is the presently preferred vegetable oil.

In some preferred embodiments of the invention sub-step ii-d) furthermore involves blending the added fat source with the milk fat globule concentrate and/or a subsequent product stream, preferably without provoking phase inversion.

The blending of step ii-d) preferably takes place at a temperature of 5-20 degrees C, more preferably 10-17 degrees C, and most preferably 12-15 degrees C.

Sub-step ii-e) involves packaging the bmp in a suitable container.

The bmp is preferably filled in suitable containers, e.g. in the form of plastic tubs. Each container typically contains 5-2000 gram bmp. The containers are preferably sealed with cover leaves, optionally welded, and closed with plastic lids. Finally, the containers may be further packed in boxes which are palletized.

The bmp preferably has a temperature of 8-16 degrees C, most preferably 10-14 degrees C during packaging and if its temperature is higher prior to sub-step ii-e) the bmp can be cooled, preferably using a scraped surface heat-exchanger, to the desired temperature.

In some preferred embodiments of the invention step ii) involves:
ii-b) holding at temperature of at most 20 degrees C for a duration sufficient for forming fat crystals in a least some of the milk fat globules, followed by
ii-c) mechanical shearing.

In some preferred embodiments of the invention step ii-d) is performed after step b) and preferably prior, during and/or after step ii-c).

Sub-steps ii-a) and/or ii-d) may preferably be performed simultaneously with a step ii-c) in embodiments where phase inversion is desired.

In some preferred embodiments of the invention similar to Example 2, step ii) comprises the sub-steps:
- ii-b) holding the milk fat globule concentrate at a temperature of 5-20 degrees C for 1-5 hours to crystallise at least some of the fat of the milk fat globule concentrate, followed by
- ii-a) addition of one or more of sodium chloride, colour, butter flavour, a fermented dairy product, and/or a combination thereof, and simultaneously
- ii-c) mechanical shearing at a temperature in the range of 5-20 degrees C, to obtain at least partial phase inversion, followed by
- ii-e) packaging of the obtained bmp in suitable containers.

In some preferred embodiments of the invention similar to Example 3, step ii) comprises the sub-steps:
- ii-b) holding the milk fat globule concentrate at a temperature of 5-20 degrees C for 1-5 hours to crystallise at least some of the fat of the milk fat globule concentrate, followed by
- ii-a) addition of one or more of sodium chloride, colour, butter flavour, a fermented dairy product, and/or a combination thereof, and ii-d) addition of vegetable oil, preferably rapeseed oil, and simultaneously
- ii-c) mechanical shearing at a temperature in the range of 5-20 degrees C, to obtain at least partial phase inversion, followed by
- ii-d) addition of more vegetable oil, preferably rapeseed oil,
- ii-e) packaging of the obtained bmp in suitable containers.

The inventors have found that it is often preferred to add 40-60% of the total amount of vegetable oil after sub-step ii-c) and the remaining part prior to or during sub-step ii-c).

In other preferred embodiments of the invention similar to Example 3, step ii) comprises the sub-steps:
- ii-b) holding the milk fat globule concentrate at a temperature of 5-20 degrees C for 1-5 hours to crystallise at least some of the fat of the milk fat globule concentrate, followed by
- ii-a) addition of one or more of sodium chloride, colour, butter flavour, a fermented dairy product, and/or a combination thereof, and simultaneously
- ii-c) mechanical shearing at a temperature in the range of 5-20 degrees C, to obtain at least partial phase inversion, followed by
- ii-d) addition of more vegetable oil, preferably rapeseed oil,
- ii-e) packaging of the obtained bmp in suitable containers.

In other preferred embodiments of the invention the milk fat globule concentrate is used in an amount sufficient to provide at least 50% w/w of the total fat of the bmp, more preferably at least 60% w/w, even more preferably at least 80% w/w, and most preferably at least 90% w/w of the total fat of the bmp.

In further preferred embodiments of the invention, for example to prepare a bmp having a chemical composition similar to butter, the milk fat globule concentrate is used in an amount sufficient to provide at least 95% w/w of the total fat of the bmp, more preferably at least 97% w/w, even more preferably at least 99% w/w, and most preferably approx. 100% w/w of the total fat of the bmp.

In even further preferred embodiments of the invention, the milk fat globule concentrate is used in an amount sufficient to provide at 50-95% w/w of the total fat of the bmp, more preferably 55-90% w/w, even more preferably 55-85% w/w, and most preferably 60-80% w/w of the total fat of the bmp.

The bmp typically comprises total protein in an amount in the range of 0.1-5% w/w, more preferably 0.2-4% w/w, even more preferably 0.4-2% w/w, and most preferably 0.5-1.0% w/w.

In some preferred embodiments of the invention the bmp has a weight ratio between casein and whey protein of 70:30-99:1, more preferably 80:20-98:2, even more preferably 85:15-98:2, and most preferably 90:10-98:2.

In some preferred embodiments of the invention the bmp comprises total fat in an amount in the range of 50-90% w/w, more preferably 55-85% w/w, even more preferably 60-84% w/w, and most preferably 80-84% w/w.

In other preferred embodiments of the invention the bmp comprises total fat in an amount in the range of 35-60% w/w, more preferably 35-50% w/w, even more preferably 36-45% w/w, and most preferably 38-42% w/w.

In further preferred embodiments of the invention the bmp comprises total fat in an amount in the range of 40-80% w/w, more preferably 45-75% w/w, even more preferably 50-70% w/w, and most preferably 55-65% w/w.

The bmp typically comprises carbohydrate in an amount in the range of 0-10% w/w, more preferably 0-8% w/w, even more preferably 0-6% w/w, and most preferably 0-5% w/w.

In some preferred embodiments of the invention the bmp comprises carbohydrate in an amount in the range of 0.1-10% w/w, more preferably 0.2-8% w/w, even more preferably 0.3-6% w/w, and most preferably 0.4-5% w/w.

The inventors have found that the milk fat globule concentrate has a consistency and spreadability which is surprisingly close to that of butter, even though the milk fat globules have not been subjected to churning. Thus, in some preferred embodiments of the invention the bmp is an oil-in-water emulsion, or at least partially an oil-in-water emulsion.

In other preferred embodiments of the invention the bmp is a water-in-oil emulsion, preferably wherein the milk fat globule concentrate has been processed to provide a bmp having a microstructure similar to butter.

Often, the bmp comprises both segments of oil-in-water emulsion and segments of water-in-oil emulsion, for example when the mechanical shearing of step ii-c) has caused some phase inversion but not complete phase inversion.

In some preferred embodiments of the invention similar to Example 2,
- step i) provides a milk fat globule concentrate having a total fat content of 75-85% w/w and which is obtainable by the method of the invention, and
- step ii) comprises the sub-steps:
   - ii-b) holding the milk fat globule concentrate at a temperature of 5-20 degrees C for 1-5 hours to crystallise at least some of the fat of the milk fat globule concentrate, followed by
   - ii-a) addition of one or more of sodium chloride, colour, butter flavour, a fermented dairy product, and/or a combination thereof, and simultaneously
   - ii-c) mechanical shearing at a temperature in the range of 5-20 degrees C, to obtain at least partial phase inversion, followed by
   - ii-e) packaging of the obtained bmp in suitable containers, and
   and wherein the milk fat globule concentrate contributes with at least 95% w/w of the total fat of the bmp.

As mentioned above, the inventors have found that it is often preferred to add 40-60% of the total amount of vegetable oil prior to or during sub-step ii-c) and the remaining part after sub-step ii-c).

Sub-steps ii-a) and/or ii-d) may preferably be performed simultaneously with a step ii-c) in embodiments where phase inversion is desired.

The present invention has been described above with reference to specific embodiments and aspects. However, other embodiments than the above described are equally possible within the scope of the invention, as defined in the appended claims.

### EXAMPLES

### Methods of analysis

### Analysis A: Total protein

The concentration of protein of a composition was determined by Kjeldahl method (ISO 8968-1:2014/IDF 20) with a conversion factor of 6.25.

### Analysis B: Total fat and dry matter

The total fat and dry matter contents of a composition was evaluated using MilkoScanTM FT1 (Foss Electric, Hillerød, Denmark) and FoodScanTM Dairy Analyser (Foss Electric, Hillerød, Denmark).

### Analysis C: Particle size distribution

The particle size distribution of a composition was determined using a Malvern Mastersizer 2000 (Malvern Instruments Ltd., Malvern, UK). The sample was added until an obscuration rate of 10-20 % and the refractive indices for milk fat and water were 1.458 and 1.330, respectively. The D[4,3], Dv10, Dv50, and Dv90 values were calculated by the Malvern software and used to interpret the droplet size distribution.

### Analysis D: Total phospholipids

The concentration of phospholipids in the skim phase from centrifugal separation and the permeate from the membrane filtration were determined by Spectral Service AG (Köln, Germany). The samples were analysed with quantitative 31P-NMR spectroscopy using a Bruker Avance III 600 MHz instrument with automated sample changer and BBO cryoprobe. Triphenyl phosphate were used as internal standard.

### Analysis E: Microstructure

The microstructure of the cream and concentrated creams was analysed using a Nikon C2 Confocal Laser Scanning Microscope (Nikon Instrument Inc, Tokyo, Japan) with a 60x objective lens. Nile red, Fluorescein isothiocyanate (FITC), and Rhodamine were used as the fluorescence stain agents for fats, proteins, and milk fat globule membrane, respectively. The fresh creams were stained with Rhodamine dissolved in acetone to a final concentration of 0.01 %. Between 5 and 10 pictures were obtained for each sample to get a representative result. The creams after storage at 5 °C were labelled with Nile Red and FITC both dissolved in acetone to a final concentration of 0.001 %.

### Analysis F: Proteins not bound to fat globules

The concentrated cream are washed by using Milli-Q water or phosphate buffer saline or simulated milk ultrafiltrate solutions at 38 °C. The cream (fat phase) and aqueous solution containing protein are separated by centrifugation (Ye et al. 2002; Fong et al. 2007). The aqueous solution after washing the cream are analysed by Kjeldahl method (ISO 8968-1:2014/IDF 20) with a conversion factor of 6.25 for total protein. Furthermore, the aqueous solution containing proteins are further treated by urea, Na-citrate and DTE buffer and individual milk proteins are analysed by LC-MS.

### Example 1: Preparation of concentrated cream

In the experiment, the inventors prepared two samples of concentrated cream; one prepared according to the invention by microfiltration and one prepared by centrifugation.

### Materials and methods:

### Materials:

Raw milk was heated to 50 degrees C and separated into cream and skim milk fractions by centrifugation. The cream containing 38-42 % fat was pasteurized (72 degrees C for 15 seconds) and cooled down to 10 degrees C for storage for microfiltration and centrifugal separation experiments.

### Process:

The pasteurized cream was microfiltered using a ceramic membrane with nominal pore size of 0.3 micron and having a contact angle against a droplet of distilled water at 20 degrees C of approx. 15 degrees. Prior to the filtration experiment, the cream was heated to approximately 55 degrees C and the filtration was carried out in a feed and bleed mode (2 L of feed added when 2 L of permeate was recovered) at a constant transmembrane pressure of at approximately 50 degrees C until the volumetric concentration factor of 2 to 2.5. The permeate flux was controlled by applying a back-pressure using a needle valve in the permeate side of the membrane.

For comparison the pasteurized cream was also concentrated using centrifugal separator (Tetra Pak, Denmark). The cream was heated at 75 degrees C and fed to the separator at the flow rate of 750 L/h. The cream was concentrated at the speed of 6185 rpm. The out let temperature was 72-74 degrees C.

### Characterisation:

The cream (raw material), the concentrated cream prepared by microfiltration, the concentrated cream prepared by centrifugation, the microfiltration permeate, and the skim milk obtained from centrifugation were characterised with respect to texture, chemical composition and microstructure as discussed in the previous section (Methods of Analysis).

### Results:

During production of the concentrated cream, the texture was like a very viscous liquid. Most surprisingly, the texture and spreadability properties of the cold stored cream from microfiltration were found to be surprisingly similar to that of butter. This is demonstrated in Figure 1 which shows a photo of concentrated cream according to the invention (Figure 1.B) spread over a paper surface using a knife, and for comparison the concentrated cream by centrifugation (Figure 1.A) spread the same way and at the same temperature. From Figure 1 it is evident that the concentrated cream obtained by microfiltration had very smooth texture and was easily spreadable compared to the concentrated cream prepared by centrifugation which had a higher brittleness and more grainy visual appearance.

The fat and protein contents of the concentrated cream from microfiltration (in Table 1) were found to be 78.16 and 3.21%, respectively. The fat concentration of the concentrated cream was similar to that of microfiltration but the protein concentration was three times lower. Similarly, the fat content in the permeate side was found to be very low in the microfiltration permeate and the skim phase from centrifugation. However, the microfiltration process retained more proteins in the concentrated cream leaving relatively lower amount of proteins in the permeate compared to that of skim phase from centrifugation. The concentration of protein in the concentrated cream using microfiltration could easily be lowered using a higher pore size membrane.

**Table 1: Chemical composition of cream (feed), concentrated cream from microfiltration and centrifugation, permeate from microfiltration and skim phase from centrifugation.**

| **Sample** | **Fat (% w/w)** | **Protein (% w/w)** |
|---|---|---|
| Feed | 41.20 | 2.26 |
| Concentrated cream with Microfiltration | 78.16 | 3.21 |
| Concentrated cream with Centrifugation | 78.15 | 0.95 |
| Microfiltration permeate | 0.22 | 0.85 |
| Skim phase from Centrifugation | 0.14 | 3.49 |

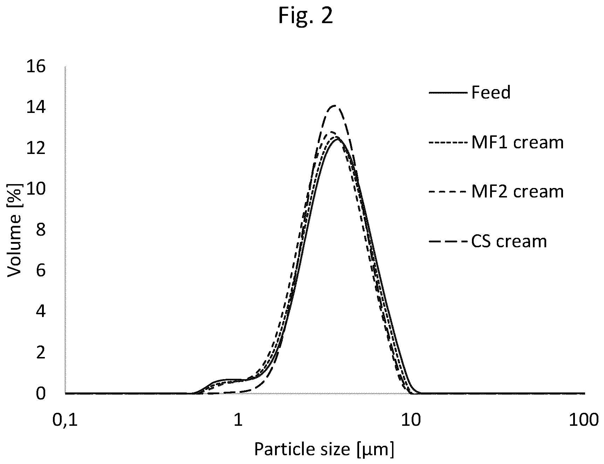

The particle size distribution of the feed and concentrated cream are shown in Figure 2. The distribution of particle size for the concentrated cream was shifted slightly towards left (i.e. towards a lower size values) compared to that of the feed (cream). Similarly, the mean particle size value, D(4,3) of concentrated cream was relatively smaller than that of feed cream. The D(4,3) values of feed, concentrated cream from centrifugation and microfiltration were 3.71, 3.62 and 3.58 micron, respectively. In addition, a small peak at the left side were found for the concentrated cream from microfiltration corresponding to the presence of micellar caseins as discussed previously.

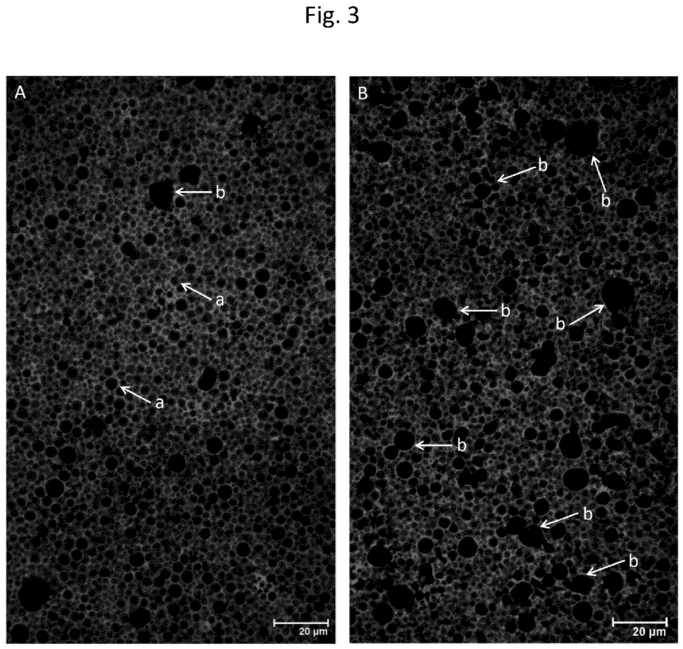

The images from confocal microscopy showed a considerable differences in the microstructures between the samples from microfiltration and centrifugation (Figure 3). Most interestingly, the majority of the fat globules were still intact with spherical shape in microfiltered cream (Figure 3.A) compared to the centrifuged cream (Figure 3.B). The fat globules in the microfiltered concentrate were found to be relatively smaller which is in agreement with the particle size distribution results. The intact and more spherical fat globules in the microfiltered cream indicate that there is less shear damage to the fat globules signifying that the membrane filtration process is more gentle than the centrifugal separation.

Figure 4 shows confocal micrographs of cold-stored concentrated creams from microfiltration (A) and centrifugation (B). Intact fat globules are seen as dark gray spheres (indicated with 'a'). The structure of the centrifuged cream is dominated by large areas of continuous fat, seen as uniform gray areas (exemplified by the rectangle denoted 'b'). Water droplets are seen as bright (predominantly spherical) spots, indicated with 'c'. One observes that the milk fat of the concentrated creams prepared by microfiltration (A) predominantly was present in globular form whereas the fat of concentrated cream prepared by centrifugation (B) was present as continuous fat domains and to a much lesser extent in the form of milk fat globules. In addition, the concentrated cream (A) had both segments of oil-in-water emulsion character of and water-in-oil emulsion character while the concentrated cream (B) mostly had water-in-oil emulsion character.

Mechanical stress applied to milk and cream leads to the shear damage to the milk fat globule membrane. Subsequently, the phospholipids are released from the damaged fat globule membranes. To estimate the potential damage of the milk fat globules due to processing of the cream, the phospholipid content in the microfiltration permeate and the skim phase of the centrifugation were analysed (Table 2). If the fat globules are damaged, phospholipids could be liberated into the serum phase and hence be removed along with the skim phase during centrifugal separation or permeate during filtration. The results showed that the skim phase had 0.05% (w/w) of phospholipids which is at least 15 times higher than in the permeate of the microfiltration. This suggests that the concentrated cream from microfiltration contains a higher amount of phospholipids compared to centrifugal separation.

In the conventional butter making process, buttermilk is produced as a side stream which has a high concentration of phospholipids due to churning. According to Britten et al. (International Journal of Food Science and Technology 2008, 43, 651-657) the phospholipids concentration in buttermilk is about 0.134% and only 54 % of the phospholipids present in the cream are recovered in the final product. The concentration of phospholipids in the concentrated cream as described in the present example where buttermilk is replaced by either skim phase by centrifugation or permeate by microfiltration had surprisingly less amount of phospholipid loss. The final phospholipids in the butter using the conventional process was 0.165% with phospholipids to fat ratio of 0.00206 (table 3). The phospholipid content could be increased by 53% (0.253% and phospholipid to fat ratio of 0.00316) using centrifugation. This could even be further increased by 83% (0.302% and phospholipid to fat ratio of 0.00377). It seems that more than 98% of phospholipids present in the cream could be recovered in the final product using microfiltration compared to 83 % from the centrifugation.

**Table 2: Concentration and distribution of phospholipids in microfiltration permeate and skim phase from centrifugation, where ND means not detected.**

| Phospholipids | Microfiltration permeate (weight %) | Skim phase from Centrifugation (Weight %) |
|---|---|---|
| Phosphatidylcholine | 0.0015 | 0.010 |
| Phosphatidylinositol | ND | 0.003 |
| Phosphatidylethanolamine | ND | 0.010 |
| Sphingomyelin | 0.0015 | 0.010 |
| Other phospholipids | ND | 0.008 |
| Total | 0.003 | 0.050 |

**Table 3: Estimation of distribution and concentration of phospholipids in microfiltration permeate and skim phase from centrifugation compared to the buttermilk from traditional butter making process. Values are adapted from Britten et al. (International Journal of Food Science and Technology 2008, 43, 651-657). The fat content in the cream and final products (butter and concentrated creams) are estimated to be 40 and 80% respectively.**

| | | Volume fraction | Phospho- lipid con- centra- tion | Phospho- lipid bal- ance | g of phospho- lipid/Kg of final product | % of re-covered phospho- lipid in fi- nal prod- uct from cream | Phospho-lipid to fat ratio in final product |
|---|---|---|---|---|---|---|---|
| Conven- tional but- ter making process | Raw milk | 1 | 0.028 | 100 | | | |
| | Skim milk | 0.91 | 0.016 | 52 | | | |
| | Cream | 0.09 | 0.149 | 48 | | | |
| | Buttermilk | 0.046 | 0.134 | 22 | | | |
| | Butter | 0.044 | 0.165 | 26 | 1.32 | 54 | 0.00206 |
| Butter with centrifugal separation | Skim milk phase | 0.046 | 0.050 | 8 | | | |
| | Concentrated cream | 0.044 | 0.253 | 40 | 2.02 | 83 | 0.00316 |
| Butter with Microfiltra- tion | Microfiltra-tion perme- ate | 0.046 | 0.003 | 0.49 | | | |
| | Concentrated cream | 0.044 | 0.302 | 47 | 2.41 | 99 | 0.00377 |

### Conclusion:

The inventors have found that microfiltration can be used to concentrate cream to reach to final fat content of more than 60%. Microfiltration can be operated as a gentle process to cause minimum damage to milk fat globules of the concentrated cream. In addition, the obtained concentrated cream has unique properties in terms of milk fat globule structure, composition especially in terms of phospholipids and texture which is applicable as a raw material for e.g. butter and milk fat containing blends. Interestingly the concentrated cream can be used as a high quality butter spread without any further processing and has sensory properties that are surprisingly similar to quality butter.

### Example 2: Preparation of butter from the concentrated cream

This experiment describes how to use the concentrated cream obtained from Example 1 for preparing a high quality lactic salted butter product.

### Materials and methods:

Materials:
- concentrated cream with a fat content of approximately 84% obtained as outlined in Example 1
- 1.2 % dry micro-salt (sodium chloride)
- 2% fermented skim milk

### Process:

Concentrated cream is obtained by the process described in Example 1 at a temperature of about 50 degrees C. The concentrated cream is cooled to 15 degrees C and kept at that temperature for 120 minutes in order for sufficient fat crystal formation to take place. After this crystallization step, a mixture of dry micro-salt and fermented milk is added in-line during mixing with a SPX DAR mixer. The purpose of this mixing is a partial phase inversion from an oil-in-water type emulsion to a water-in-oil type emulsion.

After the phase inversion, the product is cooled to 12 degrees C by means of a Scraped Surface Heat Exchanger (SSHE) and subsequently filled in retail packages. The final product is cooled to 5 degrees C in a cold storage warehouse.

### Characterisation:

The resulting butter is analysed using physical and sensory analyses in order to confirm the presence of the desired water-in-oil emulsion and desired physical and sensory properties.

### Conclusion:

The resulting butter is a lactic, salted butter (predominately in the form of a water-in-oil emulsion) with good sensory properties due to the gentle treatment (and optimal composition) of the concentrated cream. An additional major advantage of this process is the fact, that side streams (i.e. buttermilk) is avoided.

### Example 3: Preparation of a butter fat spread from the concentrated cream

This experiment describes how to use the concentrated cream obtained from Example 1 for preparing a high quality butter fat spread with a total fat content of 72% of which 26% is vegetable fat (relative to total fat) and 74% is milk fat (relative to total fat).

### Materials and methods:

Materials:
- concentrated cream with a fat content of approximately 75% fat as outlined in Example 1
- 1% (w/w) dry micro-salt (sodium chloride)
- 2% fermented skim milk
- 19% rapeseed oil
- Approximately 7% water for adjustment of total fat content

### Process:

Concentrated cream with a fat content of approximately 75% is obtained by the process described in Example 1 at a temperature of about 50 degrees C. The cream is cooled to 15 degrees C and kept at that temperature for 120 minutes in order for sufficient fat crystal formation to take place. After this crystallization step, a mixture of dry micro-salt and fermented milk as well as 50% of the total amount of rapeseed oil is added in-line during mixing with a SPX DAR mixer. The purpose of this mixing is to obtain partial phase inversion from an oil-in-water type emulsion to a water-in-oil type emulsion. After the phase inversion, the remaining 50% of rapeseed oil is added during mixing with the SPX DAR mixer.

The product is cooled to 12 degrees C by means of a Scraped Surface Heat Exchanger (SSHE) and subsequently filled in retail packages. The final product is cooled to 5 degrees C in a cold storage warehouse.

### Characterisation:

The resulting butter fat spread is analysed using physical and sensory analyses in order to confirm the presence of the desired water-in-oil emulsion, and desired physical and sensory properties.

### Conclusion:

The resulting butter fat spread is a lactic, salted butter fat spread (predominantly in the form of a water-in-oil emulsion) with good sensory properties due to the gentle treatment (and optimal composition) of the concentrated cream.

A major advantage of this process is the fact, that side streams (i.e. buttermilk) is avoided.

## Claims

1. A method of producing a milk fat globule concentrate, the method comprising the following steps:
1) providing a milk fat globule-containing dairy liquid (mfl) which is a cream having a total fat content in the range of 10-50% w/w,
2) subjecting the mfl to microfiltration (MF) to concentrate the mfl to a total fat content of in the range of 60-85% w/w, wherein the microfiltration involves the use of a ceramic microfiltration membrane, wherein the microfiltration membrane has a pore size in the range of 0.05-1.5 micron.

2. The method according to claim 1, wherein the mfl is a cream having a total fat content in the range of 10-50% w/w prepared by concentrating milk fat globules from milk, preferably by centrifugation.

3. The method according to any of the preceding claims, wherein the mfl of step 1) has a temperature in the range of 40-70 degrees C, more preferably 45-70 degrees C, even more preferably 50-65 degrees C, and most preferably 55-60 degrees C.

4. The method according to any of the preceding claims, wherein the microfiltration of step 2) furthermore involves diafiltration, preferably using water or an aqueous solution as diluent.

5. The method according to any of the preceding claims, wherein the microfiltration of step 2) does not involve diafiltration.

6. The method according to any of the preceding claims wherein the microfiltration membrane has a pore size in the range of 0.1-0.8, and most preferably 0.2-0.4 micron.

7. The method according to any of the preceding claims wherein the MF membrane is a ceramic membrane comprising or even consisting of metal oxide and/or metal carbide.

8. A milk fat globule concentrate obtainable by a method according to one or more of claims 1-7 which milk fat globule concentrate comprises:
- total fat in an amount in the range of 60-85% w/w,
- water in an amount in the range of 10-39% w/w,
- total protein in an amount in the range of 0-5% w/w
the milk fat globule concentrate having a pH in the range of 5.0-8.

9. The milk fat globule concentrate according to claim 8, having a weight ratio between total phospholipid and total fat of at least 0.0022, more preferably at least 0.0024, even more preferably at least 0.0028, and most preferably at least 0.0030.

10. A process of preparing a butter-like milk fat-containing product (bmp), the process comprising the steps of:
i) providing a milk fat globule concentrate according one or more of claims 8-9 or preparing a milk fat globule concentrate by a method according to one or more of claims 1-7,
ii) subjecting the milk fat globule concentrate and/or a subsequent product stream comprising the milk fat globule concentrate to at least one of:
ii-a) addition of one or more of sodium chloride, colour, butter flavour, water, a fermented dairy product, and/or a combination thereof,
ii-b) holding at temperature(s) of at most 20 degrees C for a duration sufficient for forming fat crystals in a least some of the milk fat globules,
ii-c) mechanical shearing,
ii-d) addition of a further fat source, preferably a vegetable oil, and
ii-e) packaging,
and wherein the milk fat globule concentrate is provided in an amount sufficient to provide at least 40% w/w of the total fat of the bmp.

11. The process according to claim 10, wherein step ii-b) involves holding at a temperature of at most 18 degrees C, more preferably at most 17 degrees C, and most preferably at most 15 degrees C.

## Patentansprüche

1. Verfahren zum Erzeugen eines Milchfettkügelchenkonzentrats, wobei das Verfahren die folgenden Schritte umfasst:
1) Bereitstellen einer Milchfettkügelchen enthaltenden Milchflüssigkeit (mfl), die ein Rahm ist, der einen Gesamtfettgehalt im Bereich von 10-50 % w/w aufweist,
2) Unterziehen der mfl einer Mikrofiltration (MF), um die mfl auf einen Gesamtfettgehalt im Bereich von 60-85 % w/w zu konzentrieren, wobei die Mikrofiltration die Verwendung einer keramischen Mikrofiltrationsmembran beinhaltet, wobei die Mikrofiltrationsmembran eine Porengröße im Bereich von 0,05-1,5 Mikrometer aufweist.

2. Verfahren nach Anspruch 1, wobei die mfl ein Rahm ist, der einen Gesamtfettgehalt im Bereich von 10-50 % w/w aufweist, der durch Konzentrieren von Milchfettkügelchen aus Milch, bevorzugt durch Zentrifugieren, hergestellt wird.

3. Verfahren nach einem der vorstehenden Ansprüche, wobei die mfl aus Schritt 1) eine Temperatur im Bereich von 40-70 Grad C, bevorzugter 45-70 Grad C, noch bevorzugter 50-65 Grad C, und besonders bevorzugt 55-60 Grad C, aufweist.

4. Verfahren nach einem der vorstehenden Ansprüche, wobei die Mikrofiltration aus Schritt 2) darüber hinaus Diafiltration beinhaltet, bevorzugt unter Verwendung von Wasser oder einer wässrigen Lösung als Verdünnungsmittel.

5. Verfahren nach einem der vorstehenden Ansprüche, wobei die Mikrofiltration aus Schritt 2) keine Diafiltration beinhaltet.

6. Verfahren nach einem der vorstehenden Ansprüche, wobei die Mikrofiltrationsmembran eine Porengröße im Bereich von 0,1-0,8, und besonders bevorzugt 0,2-0,4 Mikrometer, aufweist.

7. Verfahren nach einem der vorstehenden Ansprüche, wobei die MF-Membran eine keramische Membran ist, die Metalloxid und/oder Metallkarbid umfasst oder sogar daraus besteht.

8. Milchfettkügelchenkonzentrat, das über ein Verfahren nach einem oder mehreren der Ansprüche 1-7 erhalten werden kann, wobei das Milchfettkügelchenkonzentrat umfasst:
- Gesamtfett in einer Menge im Bereich von 60-85 % w/w,
- Wasser in einer Menge im Bereich von 10-39 % w/w,
- Gesamtprotein in einer Menge im Bereich von 0-5 % w/w
wobei das Milchfettkügelchenkonzentrat einen pH-Wert im Bereich von 5,0-8 aufweist.

9. Milchfettkügelchenkonzentrat nach Anspruch 8, das ein Gewichtsverhältnis zwischen Gesamtphospholipid und Gesamtfett von mindestens 0,0022, bevorzugter mindestens 0,0024, noch bevorzugter mindestens 0,0028, und besonders bevorzugt mindestens 0,0030, aufweist.

10. Prozess zum Herstellen eines butterartigen milchfetthaltigen Erzeugnisses (bmp), wobei der Prozess die folgenden Schritte umfasst:
i) Bereitstellen eines Milchfettkügelchenkonzentrats nach einem oder mehreren der Ansprüche 8-9 oder Herstellen eines Milchfettkügelchenkonzentrats über ein Verfahren nach einem oder mehreren der Ansprüche 1-7,
ii) Unterziehen des Milchfettkügelchenkonzentrats und/oder eines nachfolgenden Erzeugnisstroms, der das Milchfettkügelchenkonzentrat umfasst, mindestens einem von:
ii-a) Zugeben eines oder mehrerer von Natriumchlorid, Farbstoff, Butteraroma, Wasser, einem fermentierten Milcherzeugnis und/oder einer Kombination davon,
ii-b) Halten auf Temperatur(en) von höchstens 20 Grad C über eine Dauer, die zum Bilden von Fettkristallen in mindestens einem Teil der Milchfettkügelchen ausreicht,
ii-c) mechanisches Scheren,
ii-d) Zugeben einer weiteren Fettquelle, bevorzugt eines Pflanzenöls, und
ii-e) Verpacken,
und wobei das Milchfettkügelchenkonzentrat in einer Menge bereitgestellt wird, die ausreicht, um mindestens 40 % w/w des Gesamtfetts des bmp bereitzustellen.

11. Prozess nach Anspruch 10, wobei Schritt ii-b) das Halten auf einer Temperatur von höchstens 18 Grad C, bevorzugter höchstens 17 Grad C, und besonders bevorzugt höchstens 15 Grad C, beinhaltet.

## Revendications

1. Procédé de production d'un concentré de globules gras de lait, le procédé comprenant les étapes suivantes :
1) la fourniture d'un liquide laitier contenant des globules gras de lait (mfl) qui est une crème présentant une teneur totale en matières grasses dans la plage de 10-50 % p/p,
2) la soumission du mfl à une microfiltration (MF) pour concentrer le mfl à une teneur totale en matières grasses dans la plage de 60-85 % p/p, dans lequel la microfiltration implique l'utilisation d'une membrane de microfiltration en céramique, dans lequel la membrane de microfiltration présente une taille de pore dans la plage de 0,05-1,5 micromètre.

2. Procédé selon la revendication 1, dans lequel le mfl est une crème présentant une teneur totale en matières grasses dans la plage de 10-50 % p/p, préparée par concentration de globules gras du lait, de préférence par centrifugation.

3. Procédé selon l'une quelconque des revendications précédentes, dans lequel le mfl de l'étape 1) présente une température dans la plage de 40-70 degrés C, plus préférentiellement de 45-70 degrés C, encore plus préférentiellement de 50-65 degrés C, et le plus préférentiellement de 55-60 degrés C.

4. Procédé selon l'une quelconque des revendications précédentes, dans lequel la microfiltration de l'étape 2) implique en outre une diafiltration, de préférence en utilisant de l'eau ou une solution aqueuse comme diluant.

5. Procédé selon l'une quelconque des revendications précédentes, dans lequel la microfiltration de l'étape 2) n'implique pas de diafiltration.

6. Procédé selon l'une quelconque des revendications précédentes, dans lequel la membrane de microfiltration présente une taille de pore dans la plage de 0,1-0,8, et le plus préférentiellement de 0,2-0,4 micromètre.

7. Procédé selon l'une quelconque des revendications précédentes, dans lequel la membrane MF est une membrane de céramique comprenant, voire consistant en, de l'oxyde de métal et/ou du carbure de métal.

8. Concentré de globules gras de lait pouvant être obtenu par un procédé selon une ou plusieurs des revendications 1-7, lequel concentré de globules gras de lait comprend :
- des matières grasses totales en quantité dans la plage de 60-85 % p/p,
- de l'eau en quantité dans la plage de 10-39 % p/p,
- des protéines totales en quantité dans la plage de 0-5 % p/p
le concentré de globules gras de lait présentant un pH dans la plage de 5,0-8.

9. Concentré de globules gras de lait selon la revendication 8, présentant un rapport pondéral entre les phospholipides totaux et la matière grasse totale d'au moins 0,0022, plus préférentiellement d'au moins 0,0024, encore plus préférentiellement d'au moins 0,0028, et le plus préférentiellement d'au moins 0,0030.

10. Processus de préparation d'un produit contenant de la matière grasse de lait de type beurre (BMP), le processus comprenant les étapes de :
i) fourniture d'un concentré de globules gras de lait selon une ou plusieurs des revendications 8-9 ou préparation d'un concentré de globules gras de lait par un procédé selon une ou plusieurs des revendications 1-7,
ii) soumission du concentré de globules gras de lait et/ou d'un flux de produit ultérieur comprenant le concentré de globules gras de lait à au moins l'un parmi :
ii-a) l'ajout d'un ou plusieurs éléments parmi le chlorure de sodium, un colorant, un arôme de beurre, de l'eau, un produit laitier fermenté, et/ou une combinaison de ceux-ci,
ii-b) le maintien à une ou des températures d'au plus 20 degrés C pendant une durée suffisante pour former des cristaux de matière grasse dans au moins certains des globules gras de lait,
ii-c) le cisaillage mécanique,
ii-d) l'ajout d'une source de matière grasse supplémentaire, de préférence une huile végétale, et
ii-e) le conditionnement,
et dans lequel le concentré de globules gras de lait est fourni en une quantité suffisante pour fournir au moins 40 % p/p de la matière grasse totale du bmp.

11. Processus selon la revendication 10, dans lequel l'étape ii-b) implique le maintien à une température d'au plus 18 degrés C, plus préférentiellement d'au plus 17 degrés C, et le plus préférentiellement d'au plus 15 degrés C.
